# EUROPEAN PATENT APPLICATION

(11) **EP 1 717 594 A1**
(43) Date of publication of application: **02.11.2006**
(21) Application number: 05008804.6
(22) Date of filing: 21.04.2005
(51) Int. Cl.: G01S 1/00, H01Q 21/28

(54) **A receiver with increased sensitivity**

(71) Applicant: Infineon Technologies AG, 81669 München (DE)
(72) Inventor: Nylen, Tomas, 19463 Upplands Väsby (SE)
(74) Representative: Epping - Hermann - Fischer

(57) **Abstract**

The present invention relates to a receiver (14) for a satellite based navigation system, wherein the receiver (14) is intended for use in a portable unit (10). The receiver (14) comprises an antenna means (16) with n number of sectors, wherein n is an integer and n ≥ 2, a control means (18) associated with the antenna means (16), an orientation means (20) connected to said control means (18) and designed to determine a current orientation of the receiver (14). The control means (18) dynamically controls that signals from each satellite are received by using the sector of said antenna means (16) with the highest gain in a current direction of said satellite, in order to increase the sensitivity of said receiver (14).

## Description

### Technical field of the invention

The present invention relates to a receiver for a satellite based navigation system.

The present invention relates to a method for increasing the sensitivity of a receiver for a satellite based navigation system.

The present invention relates to at least one computer program product for increasing the sensitivity of a receiver for a satellite based navigation system.

### Description of related art

Today it is common practice to have a portable unit with a receiver for a satellite based navigation system to be able to determine a current position of the portable unit. This portable unit comprises an omni-directional antenna to receive the signals from the satellites. A known solution in this context is to use an antenna with only one antenna lobe. A known antenna with only one antenna lobe is a patch antenna with a semispherical antenna lobe.

A drawback with the known solutions is that the use of an omni-directional antenna increases the probability of receiving reflected signals.

Another drawback with the known solutions is that a lot of noise is received, resulting in the fact that it is more difficult to distinguish the satellite signals.

### Summary of the invention

The present invention provides for a receiver for a satellite based navigation system, wherein the receiver is intended for use in a portable unit. The receiver comprises an antenna means with n number of sectors, wherein n is an integer, and n ≥ 2. The receiver comprises a control means associated with the antenna means. The receiver comprises an orientation means connected to the control means designed to determine a current orientation of the receiver. The control means dynamically controls that signals from each satellite are received by using the sector of the antenna means with the highest gain in a current direction of the satellite. The receiver according to the present invention implies increased sensitivity of the receiver, and make use of the increased antenna gain in each sector, compared to a traditional omni-directional antenna. Another advantage with this receiver is that multipath, i.e. reflected, satellite signals are attenuated.

In this context a further advantage is achieved if said orientation means comprises a compass means and a tilt sensing means designed to sense and determine a current tilt of said receiver.

According to another embodiment, the orientation means comprises a compass means and a gyro means.

According to yet another embodiment, said orientation means has the form of a three axis compass means.

Furthermore, it is an advantage in this context if said receiver comprises a switch matrix means connected to said antenna means and to said control means with a number n of inputs and a number m of outputs, wherein m is an integer, and m < n, and a number m of RF digitizer channels connected to said switch matrix means, wherein said switch matrix means is operable to distribute signals from said antenna sectors to said RF digitizer channels with the aid of control signals from said control means.

According to another embodiment, said receiver comprises a number n of RF digitizer channels, each of them connected to a sector of said antenna means.

A further advantage in this connection is achieved if each of the RF digitizer channels, comprise an amplifier means, designed to amplify said signals from said antenna sectors, a mixing means connected to said amplifier means designed to mix down said amplified signals to a lower frequency band, and an analog/digital converter means connected to said mixing means.

Furthermore, it is an advantage in this context if said receiver comprises a processor means connected to each analog/digital converter means designed to process the digital signals from said analog/digital converter means.

For example, said portable unit may be designed in the form of a mobile telephone, a mobile communicator, a personal digital assistant, a handheld computer, a navigation equipment, or a portable computer.

Furthermore, it is an advantage in this context if said receiver is formed as a GPS receiver or if said receiver is formed as an Assisted GPS receiver. It is also possible that said receiver is formed as a Galileo receiver, or if said receiver is formed as an Assisted Galileo receiver. According to another preferred embodiment, said receiver is formed as a combination of a Galileo receiver and a GPS receiver.

Another object of the present invention is to provide a method for increasing the sensitivity of a receiver for a satellite based navigation system, wherein the receiver is intended for use in a portable unit. The method comprises the following steps:
- determining a current orientation of the receiver;
- determining a current position of each satellite with the aid of satellite navigation data, and
- with the aid of a control means comprised in the receiver, to dynamically control that signals from each satellite are received by using a sector, of a number n of sectors of an antenna means comprised in the receiver, with the highest gain in a current direction of the satellite, wherein n is an integer, and n ≥ 2. The method according to the present invention increases the sensitivity of an embedded receiver, and makes use of the increased antenna gain in each sector, compared to a traditional omni-directional antenna. Another advantage with this method is that multipath effects, i.e. reflected satellite signals are attenuated.

A further advantage in this context is achieved if said step to determine a current orientation of said receiver comprises the steps of:
- determining the direction of said receiver in relation to the magnetic north with the aid of a compass means comprised in said receiver; and
- sensing and determining a current tilt of said receiver with the aid of a tilt sensing means comprised in said receiver.

According to another embodiment, said step to determine a current orientation of said receiver comprises the steps of:
- determining the direction of said receiver in relation to the magnetic north with the aid of a compass means comprised in said receiver; and
- sensing and determining a current tilt of said receiver with the aid of a gyro means comprised in said receiver.

According to yet another embodiment, said step to determine a current orientation of said receiver is performed with the aid of a three axis compass means comprised in said receiver.

Furthermore, it is an advantage in this context if said method also comprises the step of:
- distributing signals from said antenna sectors to a number m of RF digitizer channels comprised in said receiver with the aid of control signals from said control means, which signals control a switch matrix means with a number n of inputs, and a number m of outputs, and comprised in said receiver, wherein m is an integer, and m < n.

According to another embodiment, said method can comprise the step of:
- forwarding signals from said n antenna sectors to the number n of RF digitizer channels comprised in said receiver.

A further advantage in this context is achieved if said method also comprises the steps of:
- amplifying said signals from said antenna sectors;
- mixing down said amplified signals to a lower frequency band; and
- performing an analog/digital conversion on each signal.
   Furthermore, it is an advantage in this context if said method also comprises the step of processing said digital signal after the conversion step.
   A further advantage in this context is achieved if said portable unit is provided in the form of a mobile telephone, a mobile communicator, a personal digital assistant, a handheld computer, a navigation equipment, or a portable computer.
   Furthermore, it is an advantage in this context if said receiver is provided in the form of a GPS receiver or if said receiver is provided in the form of an Assisted GPS receiver. It may also be advantageous, if said receiver is provided in the form of a Galileo receiver, or if said receiver is provided as an Assisted Galileo receiver. According to a further preferred embodiment of the method, said receiver is provided as a combination of a Galileo receiver and a GPS receiver.
   Another object of the present invention is to provide at least one computer program product for increasing the sensitivity of a receiver for a satellite based navigation system, wherein the receiver is intended for use in a portable unit, wherein the product(s) is/are directly loadable into the internal memory of at least one digital computer. The at least one computer program product comprises software code portions for performing the steps of the method according to the present invention, when said at least one product is/are run on said at least one computer. The computer program product(s) according to the present invention increase(s) the sensitivity of an embedded receiver, and make(s) use of the increased antenna gain in each sector, compared to a traditional omni-directional antenna. Another advantage with this/these computer program product(s) is that multipath effects, i.e. reflected, satellite signals are attenuated.
   Embodiments of the invention will now be described with reference to the accompanying drawings, in which:

### Brief description of the drawings

Figure 1 is a block diagram of a first embodiment of a receiver for a satellite based navigation system according to the present invention;
Figure 2 is a block diagram of a second embodiment of a receiver for a satellite based navigation system according to the present invention;
Figure 3 is a flow chart of a method for increasing the sensitivity of a receiver for a satellite based navigation system according to the present invention;
Figure 4 is a more detailed flow chart of a first embodiment of the method disclosed in figure 3;
Figure 5 is a more detailed flow chart of a second embodiment of the method disclosed in figure 3; and
Figure 6 is a schematic diagram of a computer program product according to the present invention.

### Detailed description of the invention

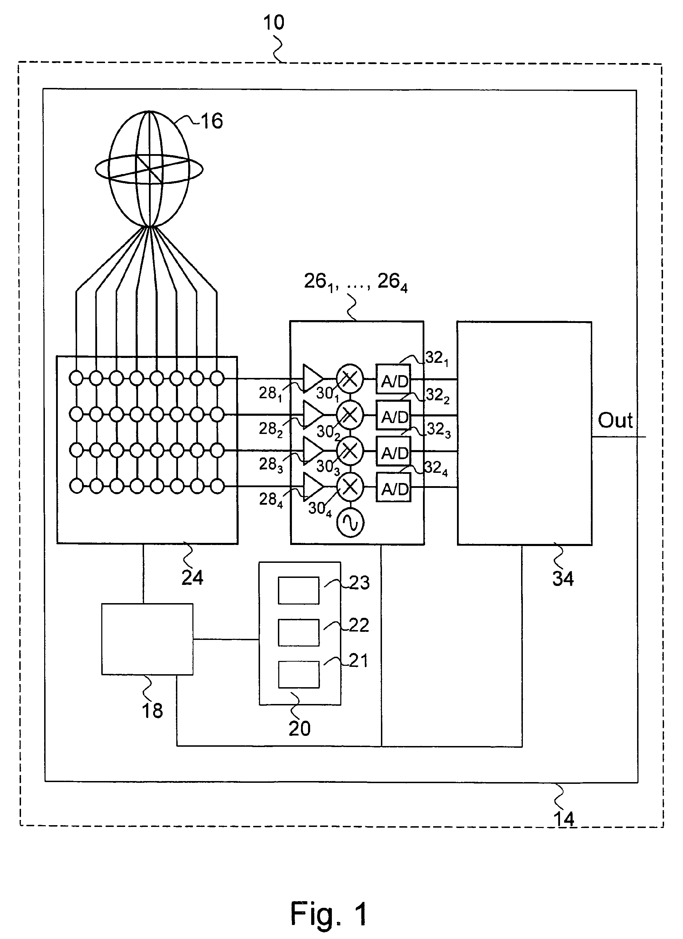

Figure 1 illustrates a block diagram of a first embodiment of a receiver 14 according to the present invention. The object of the present invention is to increase the sensitivity of a receiver 14 for a satellite based navigation system, wherein the receiver 14 is intended for use in a portable unit 10, see figure 1. The receiver 14 comprises an antenna means 16 with 8 antenna sectors. In figure 1 eight sectors are shown, but the general case comprises a number n of sectors, wherein n is an integer, and n ≥ 2. The receiver 14 also comprises a switch matrix means 24 connected to the 8 antenna sectors of the antenna means 16. The switch matrix means 24 shown in figure 1 has 8 inputs and four outputs. Generally, the switch matrix means 24 comprises a number n of inputs, and a number m of outputs, wherein m is an integer, and m < n. The receiver 14 also comprises a control means 18 connected to four RF digitizer channels 26₁, ..., 26₄, and to a processor means 34. Also connected to the control means 18 is an orientation means 20 designed to determine a current orientation of the receiver 14. According to a first embodiment, the orientation means 20 comprises a compass means 21, and a tilt sensing means 22 designed to sense and determine a current tilt of the receiver 14. According to a second embodiment, the orientation means 20 comprises a compass means 21, and a gyro means 23. According to a third embodiment, the orientation means 20 is designed as a three axis compass means. As illustrated in figure 1, the outputs of the switch matrix means 24 are connected to four RF digitizer channels 26₁ - 26₄. The switch matrix means 24 is designed to distribute signals from the 8 antenna sectors to the 4 RF digitizer channels 26₁ - 26₄ with the aid of control signals from the control means 18. As can be seen in figure 1, each RF digitizer channel 26₁ - 26₄ comprises an amplifier means 28₁ - 28₄ designed to amplify the signals from the antenna sectors, a mixing means 30₁ - 30₄ connected to the amplifier means 28₁ - 28₄ and designed to mix down the amplified signals to a lower frequency band, and an analog/digital converter means 32₁ - 32₄ connected to the mixing means 30₁ - 30₄ designed to convert the analog signals to digital signals. The receiver 14 also comprises a processor means 34 connected to the RF digitizer channels 26₁ - 26₄ respectively the analog/digital converter means 32₁ - 32₄ designed to process the digital signals. As can be seen in figure 1, the output signal from the receiver 14 is issued by the processor means 34.

The portable unit 10 may be designed e.g. as a mobile telephone, a mobile communication, a personal digital assistant, a handheld computer, a navigation equipment or a portable computer.

In a preferred embodiment of the receiver 14 according to the present invention, the receiver is formed as a GPS receiver 14 or as an Assisted GPS receiver 14. In another embodiment of the receiver said receiver is formed as a Galileo receiver 14, or as an Assisted Galileo receiver 14. According to a further preferred embodiment said receiver is formed as a combination of a Galileo receiver and a GPS receiver 14.

With this receiver 14, each satellite is received by using the antenna sector that has the highest gain in the direction which the satellite is currently facing. The current orientation of the receiver 14 can be determined by means of the aid of the orientation means 20. With the help of GPS data, which tells the location of every satellite, the receiver 14 knows what antenna sector to use for a particular satellite.

Each RF digitizer channel 26₁ - 26₄ can be used to receive one or several satellites as long as they are received through the same antenna sector. As the received satellites are always above the horizon, the number of RF digitizer channels 26₁ - 26₄ can be lower than the number of antenna sectors.

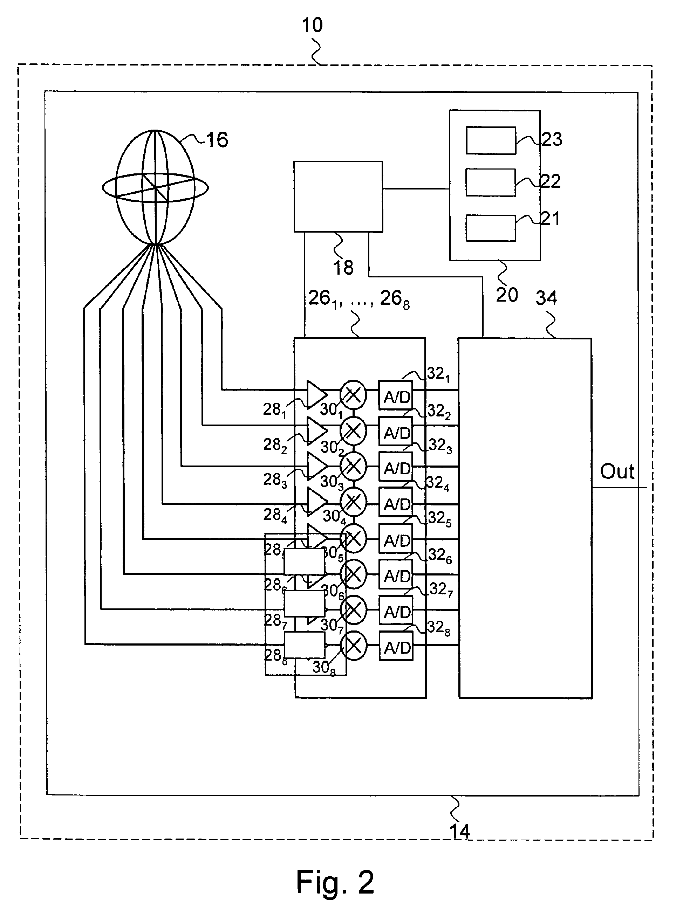

Figure 2 shows a block diagram of a second embodiment of a receiver 14 according to the present invention. The object of the present invention is to increase the sensitivity of a receiver 14 for a satellite based navigation system, wherein the receiver 14 is intended for use in a portable unit 10, as can be seen in figure 2. Similar components in figures 1 and 2 are referred to with similar reference signs. In the second embodiment in figure 2, there is one RF digitizer channel 26₁ - 26ₙ for each antenna sector. The general case will consequently comprise a number n of antenna sectors and a number n of RF digitizer channels 26₁ - 26ₙ, wherein n is an integer, and n ≥ 2. As can be seen in figure 2, no switch matrix means is needed. The embodiment works in the same way as the embodiment disclosed in figure 1, and will not be described more detailed herein.

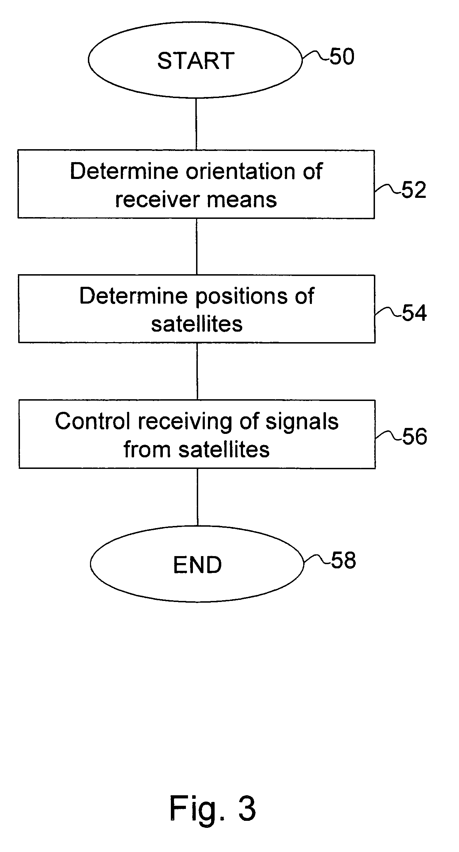

Figure 3 shows a flow chart of a method for increasing the sensitivity of a receiver for a satellite based navigation system according to the present invention. The receiver 14 is intended for use in a portable unit 10 (see figures 1 and 2). The method begins at block 50. The method continues at block 52 with the step of determining a current orientation of the receiver 14. Thereafter, at block 54, the method continues with the step of determining a current position of each satellite. The method continues at block 56. With the aid of a control means 18 (see figures 1 and 2) comprised in the receiver 14, it is dynamically controlled that signals from each satellite are received by using a sector of a number n of sectors of an antenna means 16 comprised in the receiver 14, with the highest gain in a current direction of the satellite, wherein n is an integer, and n ≥ 2. The method is completed at block 58.

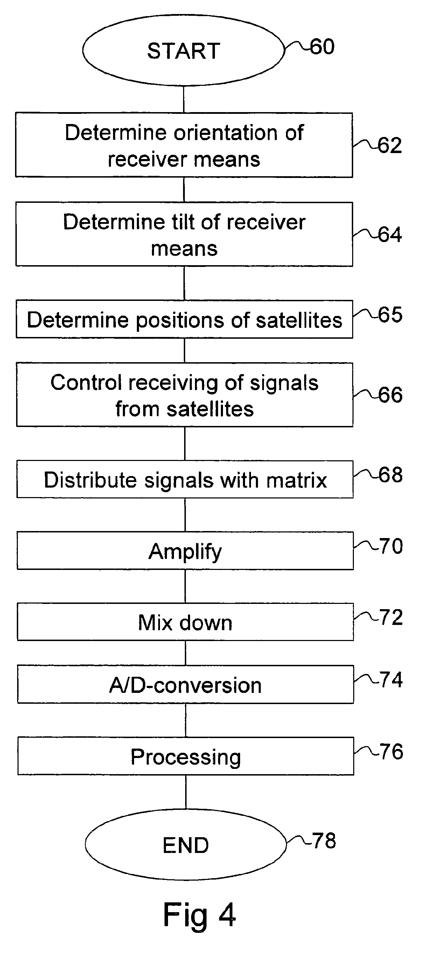

Figure 4 represents a more detailed flow chart of a first embodiment of the method in figure 3. The method is intended for increasing the sensitivity of a receiver 14 for a satellite based navigation system according to the present invention. The receiver 14 is intended for use in a portable unit 10 (see figure 1). The method begins at block 60. The method continues at block 62 with the step of determining a current orientation of the receiver 14. Thereafter, at block 64, the method continues with the step of sensing and determining a current tilt of the receiver 14 with the aid of a tilt sensing means 22 comprised in the receiver 14. Thereafter, at block 65, the method continues with the step of determining a current position of each satellite. The method continues at block 66. With the aid of a control means 18 comprised in the receiver 14, it is dynamically controlled that signals from each satellite are received by using a sector, of n number of sectors of an antenna means 16 comprised in the receiver 14, with the highest gain in a current direction of the satellite, wherein n is an integer, and n ≥ 2. Thereafter, at block 68, the method continues with the step of distributing signals from the n antenna sectors to a number m of RF digitizer channels 26₁ - 26ₘ (see figure 1) comprised in the receiver 14 with the aid of control signals from the control means 18. The method continues at block 70 with the step of amplifying the m signals from the antenna sectors. Thereafter, at block 72, the method continues with the step of mixing down the amplified signals to a lower frequency band. The method continues at block 74 with the step of performing an analog/digital conversion on each signal. Thereafter, at block 76, the method continues with the step of processing the digital signals after the conversion step. The method is completed at block 78.

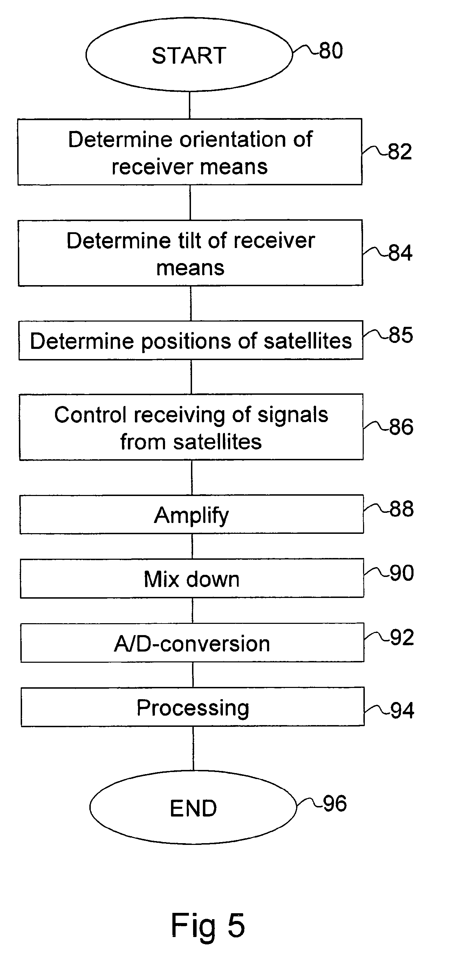

Figure 5 represents a more detailed flow chart of a second embodiment of the method disclosed in figure 3. The method is intended for increasing the sensitivity of a receiver 14 for a satellite based navigation system according to the present invention. The receiver 14 is intended for use in a portable unit 10 (see figure 2). The method begins at block 80. The method continues at block 82 with the step of determining a current orientation of the receiver 14. Thereafter, at block 84, the method continues with the step of sensing and determining a current tilt of the receiver 14 with the aid of a tilt sensing means 22 comprised in the receiver 14. The method continues at block 85 with the step of determining a current position of each satellite with the aid of satellite navigation data. Thereafter, at block 86, with the aid of a control means 18 comprised in the receiver 14, it is dynamically controlled that signals from each satellite are received by using a sector of a number n of sectors of an antenna means 16 comprised in the receiver 14 with the highest gain in a current direction of the satellite, wherein n is an integer, an n ≥ 2. The method continues at block 88 with the step of amplifying the signals from the n antenna sectors. Thereafter, at block 90, the method continues with the step of mixing down the amplified signals to a lower frequency band. The method continues, at block 92, with the step of performing an analog/digital conversion on each signal. Thereafter, at block 94, the method continues with the step of processing the digital signals after the conversion step. The method is completed at block 96.

In a preferred embodiment of the method according to the present invention, the portable unit 10 is provided in the form of a mobile telephone, a mobile communication, a personal digital assistant, a handheld computer, a navigation equipment, or a portable computer.

In a preferred embodiment of the method according to the present invention, the receiver is provided in the form of a GPS receiver 14 or in the form of an Assisted GPS receiver. In another embodiment of the method said receiver is provided as a Galileo receiver 14, or said receiver is provided as an Assisted Galileo receiver 14. According to a further development of the method said receiver is provided as a combination of a Galileo receiver and a GPS receiver 14.

In a preferred embodiment of the method according to the present invention, the step of determining a current location of the portable unit 10 is performed by means of a compass 20 comprised in the portable unit 10.

In a preferred embodiment of the method according to the present invention, the tilt sensing means 22 is provided in the form of a gyro 23.

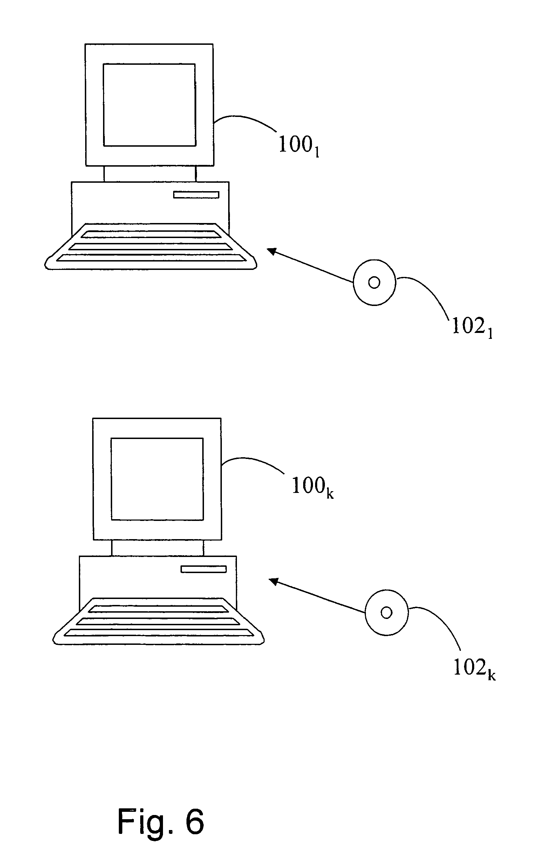

Figure 6 shows a schematic diagram of some computer program products according to the present invention for increasing the sensitivity of a receiver 14 for a satellite based navigation system, wherein the receiver 14 is intended for use in a portable unit 10. The figure discloses k different digital computers 100₁, ...,100ₖ, wherein k is an integer. The figure also discloses k different computer program products 102₁, ..., 102ₖ, here shown in the form of compact discs. The different computer program products 102₁, ..., 102ₖ are directly loadable into the internal memory of the k different digital computers 100₁, ..., 100ₖ. Each computer program product 102₁, ..., 102ₖ comprises software code portions for performing some or all of the steps of figure 3 when the product(s) 102₁ ..., 102ₖ is/are run on said computer (s) 100₁ ..., 100ₖ. Said computer program products 102₁, ..., 102ₖ may be stored on floppy disks, RAM disks, magnetic tapes, opto magnetical disks or any other suitable products.

The invention is not limited to the embodiments described in the foregoing. It will be obvious that many different modifications are possible within the scope of the following claims.

### List of reference symbols

- 10: portable unit
- 14: receiver
- 16: antenna means
- 18: control means
- 20: orientation means
- 21: compass means
- 22: tilt sensing means
- 23: gyro means
- 24: switch matrix means
- 26: RF digitizer channel
- 28: amplifier means
- 30: mixing means
- 32: analog/digital converter means
- 34: processor means
- 100: digital computer
- 102: computer program

## Claims

1. A receiver (14) for a satellite based navigation system, wherein said receiver (14) is intended for use in a portable unit (10), **characterized in that** said receiver (14) comprises an antenna means (16) with a number n of sectors, wherein n is an integer, and n ≥ 2, a control means (18) associated with said antenna means (16), an orientation means (20) connected to said control means (18) and designed to determine a current orientation of said receiver (14), wherein said control means (18) dynamically controls that signals from each satellite are received by using the sector of said antenna means (16) with the highest gain in a current direction of said satellite, in order to increase the sensitivity of said receiver (14).

2. A receiver (14) according to claim 1, **characterized in that** said orientation means (20) comprises a compass means (21) and a tilt sensing means (22) designed to sense and determine a current tilt of said receiver (14).

3. A receiver (14) according to claim 1, **characterized in that** said orientation means (20) comprises a compass means (21) and a gyro means (23).

4. A receiver (14) according to claim 1, **characterized in that** said orientation means (20) is designed in the form of a three axis compass means.

5. A receiver (14) according to any one of claims 1 - 4, **characterized in that** said receiver (14) comprises a switch matrix means (24) connected to said antenna means (16) with a number n of inputs and a number m of outputs, wherein m is an integer, and m < n, and a number m of RF digitizer channels (26₁,...,26ₘ) connected to said switch matrix means (24), wherein said switch matrix means (24) is designed to distribute signals from said antenna sectors to said RF digitizer channels (26₁,...,26ₘ) with the aid of control signals from said control means (18).

6. A receiver (14) according to any one of claims 1 - 4, **characterized in that** said receiver (14) comprises a number n of RF digitizer channels (26₁,...,26ₙ), each connected to a sector of said antenna means (16).

7. A receiver (14) according to claim 5 or 6, **characterized in that** each RF digitizer channel (26₁,...,26ₘ ; 26₁,...26ₙ) comprises an amplifier means (28₁,...,28ₘ; 28₁,...28ₙ) designed to amplify said signals from said antenna sectors, a mixing means (30₁,...,30_{m;} 30₁,...30ₙ) connected to said amplifier means (28₁,...,28ₘ; 28₁,...28ₙ) and designed to mix down said amplified signals to a lower frequency band, and an analog/digital converter means (32₁,...,32ₘ; 32₁, ...32ₙ) connected to said mixing means (30₁,...,30ₘ; 30₁, ...30ₙ).

8. A receiver (14) according to claim 7, **characterized in that** said receiver (14) comprises a processor means (34) connected to each analog/digital converter means (32₁,...,32ₘ; 32₁,...32ₙ) and designed to process the digital signals from said analog/digital converter means (32₁,...,32ₘ; 32₁, ...32ₙ).

9. A receiver (14) according to claim 8, **characterized in that** said control means (18) is connected to said RF digitizer channels (26₁, ..., 26ₘ; 26₁, ..., 26ₙ) and to said processor means (34).

10. A receiver (14) according to any of claims 1 - 9, **characterized in that** said portable unit (10) is designed as a mobile telephone, a mobile communicator, a personal digital assistant, a handheld computer, a navigation equipment, or a portable computer.

11. A receiver (14) according to any of claims 1 - 10, **characterized in that** said receiver is formed as a GPS receiver (14) or as an Assisted GPS receiver (14).

12. A receiver (14) according to any of claims 1 - 10, **characterized in that** said receiver is formed as a Galileo receiver (14) or as an Assisted Galileo receiver (14).

13. A receiver (14) according to any of claims 1 - 10, **characterized in that** said receiver is formed as a combination of a Galileo receiver and a GPS receiver (14).

14. A method for increasing the sensitivity of a receiver (14) for a satellite based navigation system, wherein said receiver (14) is intended for use in a portable unit (10), said method comprises the steps of:
- determining a current orientation of said receiver (14);
- determining a current position of each satellite; and,
- with the aid of a control means (18), comprised in said receiver (14), dynamically controlling that signals from each satellite are received by using a sector of a number n of sectors of an antenna means (16) comprised in said receiver (14) with the highest gain in a current direction of said satellite, wherein n is an integer; and n ≥ 2.

15. A method for increasing the sensitivity according to claim 14, **characterized in that** said step of determining a current orientation of said receiver (14) comprises the steps of:
- determining the direction of said receiver (14) in relation to the magnetic north with the aid of a compass means (21) comprised in said receiver (14); and
- sensing and determining a current tilt of said receiver (14) with the aid of a tilt sensing means (22) comprised in said receiver (14).

16. A method for increasing the sensitivity according to claim 14, **characterized in that** said step of determining a current orientation of said receiver (14) comprises the steps of:
- determining the direction of said receiver (14) in relation to the magnetic north with the aid of a compass means (21) comprised in said receiver (14); and
- sensing and determining a current tilt of said receiver (14) with the aid of a gyro means (22) comprised in said receiver (14).

17. A method for increasing the sensitivity according to claim 14, **characterized in that** said step of determining a current orientation of said receiver (14) is performed with the aid of a three axis compass means (20) comprised in said receiver (14).

18. A method for increasing the sensitivity according to any one of claims 17 - 17, **characterized in that** said method comprises the step of distributing signals from said antenna sectors to a number m of RF digitizer channels (26₁,...,26ₘ) comprised in said receiver (14) with the aid of control signals from said control means (18), said signals controlling a switch matrix means (24) with a number n of inputs, and a number m of outputs and comprised in said receiver (14), wherein m is an integer, and m < n.

19. A method for increasing the sensitivity according to any one of claims 14 - 17, **characterized in that** said method comprises the step of forwarding signals from said n antenna sectors to a number n of RF digitizer channels (26₁,...,26ₙ) comprised in said receiver (14).

20. A method for increasing the sensitivity according to claim 18 or 19, **characterized in that** said method comprises the steps of:
- amplifying said signals from said antenna sectors;
- mixing down said amplified signals to a lower frequency band; and
- performing an analog/digital conversion of each signal.

21. A method for increasing the sensitivity according to claim 20, **characterized in that** said method comprises the step of processing said digital signal after the conversion step.

22. A method for increasing the sensitivity according to any one of claims 14 - 21, **characterized in that** said portable unit (10) is provided in the form of a mobile telephone, a mobile communicator, a personal digital assistant', a handheld computer, a navigation equipment, or a portable computer.

23. A method for increasing the sensitivity according to any one of claims 14 - 22, **characterized in that** said receiver is provided in the form of a GPS receiver (14) or in the form of an Assisted GPS receiver (14).

24. A method for increasing the sensitivity according to any one of claims 14 - 22, **characterized in that** said receiver is provided in the form of a Galileo receiver (14) or in the form of an Assisted Galileo receiver (14).

25. A method for increasing the sensitivity according to any one of claims 14 - 22, **characterized in that** said receiver is provided in the form of a combination of a Galileo receiver and a GPS receiver (14).

26. At least one computer program product (102₁, ..., 102ₖ) for increasing the sensitivity of a receiver (14) for a satellite based navigation system, wherein said receiver (14) is intended for use in a portable unit (10), wherein said product (s) (102₁, ..., 102ₖ) is/are directly loadable into the internal memory of at least one digital computer (100₁, ..., 100ₖ), comprising software code portions for performing the steps of claim 12 when said at least one product (102₁, ..., 102ₖ) is/are run on said at least one computer (100₁, ..., 100ₖ) .
